# FASCICULE DE BREVET EUROPEEN

(11) **EP 0 731 602 B1**
(45) Date de publication et mention de la délivrance du brevet: **16.08.2001**
(21) Numéro de dépôt: 96400492.3
(22) Date de dépôt: 08.03.1996
(51) Int. Cl.: H04N 5/38, H04N 7/06

(54) **Chaîne d'émission de signaux de télévision comportant une voie de données**
Fernsehkanal mit einem Datenkanal
Television broadcast channel with a data channel

(30) Priorité: 09.03.1995 FR 9502759
(43) Date de publication de la demande: 11.09.1996
(73) Titulaire: TELEDIFFUSION DE FRANCE, 75732 Paris Cédex 15 (FR)
(72) Inventeur: Turcan, Evelyne, 78380 Bougival (FR); Guinamant, Paul, 78000 Versailles (FR); Dejean, Jean-Claude, 75013 Paris (FR); Boijaud, Hervé, 78690 Les Essarts Le Roi (FR)
(74) Mandataire: Bloch, Gérard

(56) Documents cités:
- EP-A- 0 028 181
- EP-A- 0 064 431
- EP-A- 0 141 715
- EP-A- 0 149 950
- DE-A- 4 024 806
- US-A- 5 029 003
- US-A- 5 198 904
- US-A- 5 357 284
- SYMPOSIUM RECORD BROADCAST SESSIONS OF THE 16TH INTERNATIONAL SYMPOSIUM OF MONTREUX, SWITZERLAND, 17-22 JUNE 1989, pages 235-241, XP000041119 BETNER G.: "NICAM 728 INTRODUCTION IN SWEDEN"
- IBC88 INTERNATIONAL BROADCASTING CONVENTION, 23 - 27 Septembre 1988, BRIGHTON (UK), pages 344-348, XP000232969 WITTROCK C.: "DESIGN ASPECTS OF EQUIPMENT FOR TERRESTRIAL DIGITAL SOUND TRANSMISSION"
- IBC84 INTERNATIONAL BROADCASTING CONVENTION, 21 - 25 Septembre 1984, BRIGHTON, UK, pages 83-89, XP002003649 DOUGLAS P. ET AL: "THE NEXT GENERATION OF UHF TELEVISION TRANSMITTERS"

## Description

La présente invention concerne une chaîne d'émission de signaux de télévision comportant une voie de données. Elle a pour origine des études relatives à l'adaptation de la norme L SECAM de diffusion en France.

On rappellera tout d'abord qu'un signal de télévision occupe une plage de fréquences appelée canal, dans laquelle sont diffusés l'image et le son associé. Afin d'éviter les interférences, entre l'image et le son, d'une part, et pour permettre au récepteur la récupération aisée des composantes du signal, d'autre part, l'image et le son occupent chacun une zone de fréquences qui lui est réservée dans le canal.

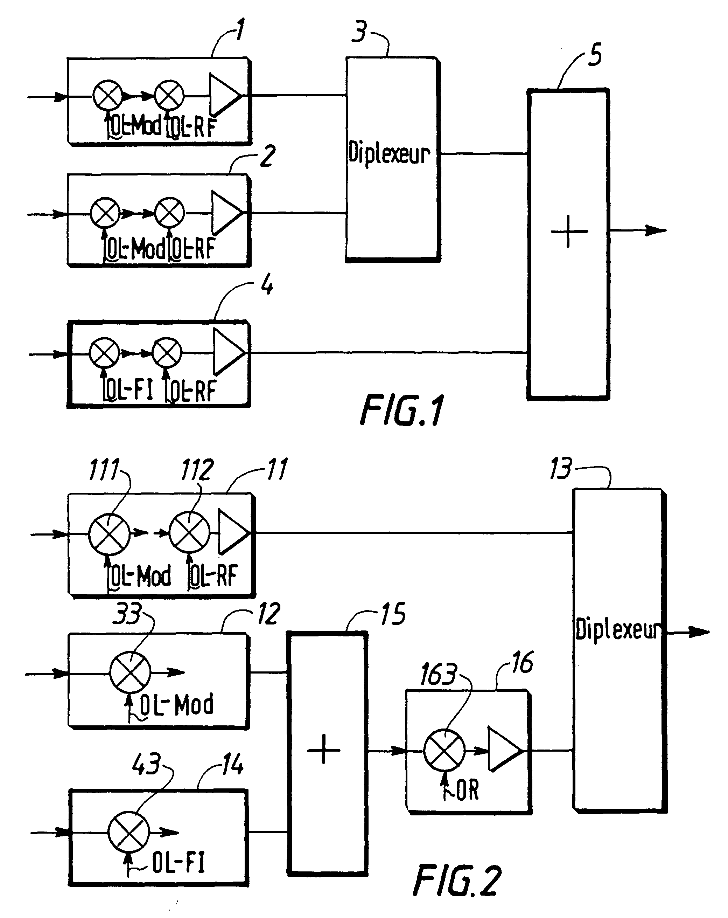

Pour l'émission, le signal vidéo (image) et le signal audio (son) provenant d'une source de programme quelconque (car de reportage, studio, magnétoscope) subissent chacun de façon connue, dans deux chaînes respectives, repérées 2 et 1 sur la figure 1, une translation de fréquence après modulation, destinée à leur faire occuper chacun les zones respectives de fréquences prévues.

Les deux signaux amplifiés séparément au niveau voulu sont ensuite multiplexés, ou juxtaposés, pour former un seul signal composite d'émission. L'utilisation de deux chaînes séparées évite tout risque d'interférences. La composition des signaux après amplification intervient dans un circuit appelé diplexeur, repéré 3, qui suit les étages de puissance des deux émetteurs, son et image.

Pour l'introduction de services nouveaux, ou pour faire évoluer la norme vers le son numérique, on a cherché à disposer d'une voie de données à l'intérieur de la plage, ou canal, prévue. C'est par exemple le cas pour la norme du Multiplex Audio à Compression Quasi Instantanée, NICAM, (Near Instantanous Companded Audio Multiplex). Pour l'émission de la voie de données, on ajoutait jusqu'à maintenant une baie d'électronique, en fait un émetteur spécifique, comportant toute une chaîne de changements de fréquence et d'amplification positionnant le signal de données dans une troisième zone de fréquence réservée à cet effet dans le canal TV initial. Le signal de données était ensuite additionné dans un autre coupleur, avec les signaux image et son issus du diplexeur, avant que les trois composantes ne soient émises simultanément.

Une telle baie, encombrante et coûteuse, tant à l'achat qu'en coût d'installation, surtout aux puissances élevées, jusqu'à 25 kW image, nécessite une maintenance soutenue.

Une mise en forme commune du son et de la voie NICAM remettrait en cause le diplexeur, non adapté à cette utilisation, et induirait à terme une diminution de la bande image, donc de sa définition.

Une mise en forme par amplification commune, image et NICAM, était tout autant inimaginable. En effet, l'image est diffusée par modulation d'amplitude positive de l'intensité électrique d'une onde porteuse. C'est-à-dire que tout parasite crée une « surmodulation » d'amplitude qui peut se traduire en réception par un défaut visible. Il était donc exclu de tolérer dans la chaîne d'émission une perturbation de l'image telle que celles dues aux défauts que les non linéarités d'amplification peuvent créer sur l'image et le son à cause de la présence de la voie NICAM.

US 5 029 003 enseigne une chaîne d'émission de signaux de télévision comportant un additionneur et un mélangeur communs à une chaîne de signaux vidéo et à une chaîne de signaux audio numériques.

US 5 357 284 enseigne un modulateur audio numérique ne traitant que la chaîne son, le signal vidéo qu'il reçoit ne servant qu'à un asservissement d'un oscillateur. Par ailleurs, dans un circuit commun commandant un émetteur, la composition des signaux audio et vidéo est un simple addition, ou juxtaposition de bandes, par coupleur directif en aval d'un filtre d'élimination de bande latérale résiduelle : le traitement des signaux est déjà terminé.

La présente invention vise à réduire considérablement le volume et le prix du matériel supplémentaire tout en conservant une qualité satisfaisante du signal émis.

A cet effet, l'invention concerne une chaîne d'émission de signaux de télévision comportant une chaîne de mise en forme d'une voie image analogique et une chaîne de mise en forme d'une voie de données, avec une partie de traitement commune aux deux chaînes caractérisée par le fait qu'elle comporte un filtre passe-bande disposé en aval d'un mélangeur à fréquence intermédiaire de la chaîne de données et, en amont de la partie commune, la chaîne de données comporte un atténuateur destiné à favoriser les performances du mélangeur.

Ainsi, le mélangeur est utilisé à des niveaux atténués par rapport aux spécifications et les dégradations des données et leurs influences potentielles sur l'image et le son sont donc minimales. De ce fait, l'amplification des signaux de données est effectuée en commun avec celle de l'image, sans duplication du matériel encombrant et coûteux.

L'invention sera mieux comprise à l'aide de la description suivante de la chaîne d'émission de l'invention, en référence au dessin annexé, sur lequel :
- la figure 1, déjà mentionnée, est un schéma par blocs représentant une chaîne d'émission de l'art antérieur,
- la figure 2 est un schéma par blocs représentant la chaîne d'émission de l'invention,
- la figure 3 représente les bandes de fréquences émises,
- la figure 4 est un schéma électrique par blocs, plus détaillé, de l'invention, les parties amont de la voie image et de la voie de données étant reliées à un coupleur d'entrée de la partie commune, et
- la figure 5 représente une cellule de prédistorsion utilisée pour compenser les distorsions existantes d'un émetteur des signaux de télévision.

Dans cet exemple, il s'agit d'une chaîne d'émission à la norme L SECAM / NICAM.

Par comparaison des figures 1 et 2, on observe que la chaîne de la mise en forme du signal audio 1, respectivement 11, alimente dans les deux cas directement le diplexeur de sortie 3, respectivement 13. Elle comporte, de façon connue, un modulateur en fréquence intermédiaire (signal OL-Mod) 111 suivi d'un mélangeur à fréquence radio 112 (signal OL-RF).

Par contre, la chaîne 2 de mise en forme du signal image est, sur la figure 2, scindée en une partie, ou tronçon, amont 12 et en une partie aval 16 alimentant le diplexeur 13. Un coupleur 15 relie, par une première entrée, la sortie de la partie amont 12 à l'entrée de la partie aval 16.

De façon similaire, la chaîne NICAM 4 est, sur la figure 2, scindée en un tronçon amont 14 relié en sortie, par une seconde entrée du coupleur 15, au tronçon aval 16. Les éléments 12, 14-16 présentent ainsi une structure en Y comportant une partie 16 de traitement de mise en forme et amplification communes aux deux chaînes considérées. Les blocs 12 et 14 comportent ici chacun un mélangeur respectif, 33 et 43, recevant un signal respectivement OL-Mod et OL-FI d'oscillateur à fréquence intermédiaire et le bloc 16 comporte un mélangeur 163 recevant un signal OR d'un oscillateur pour la transposition du signal composite image-NICAM sur la fréquence radio d'émission.

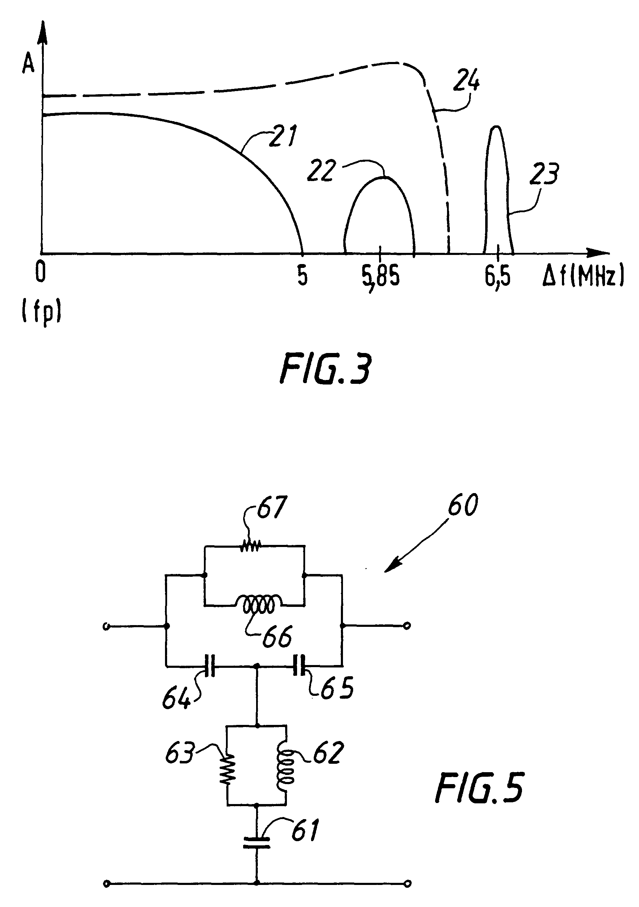

Avant d'expliquer plus en détails les fonctions des blocs ci-dessus, les positions relatives des trois plages de fréquences, respectivement image, son et NICAM, vont être précisées, en regard de la figure 3.

L'écart Δf des fréquences, en mégahertz (MHz), est porté en abscisse, relativement à une fréquence porteuse d'émission fp, radio dans cet exemple, dite également fréquence canal. En ordonnée est portée l'amplitude A des signaux. Le signal vidéo d'image analogique 21 occupe une plage qui, selon le contenu du programme, peut s'étendre jusqu'à 5 MHz. La voie NICAM, 22, est centrée sur une fréquence à 5,85 MHz de l'image, avec ± 250 kHz de bande passante pour transmettre un débit numérique de 728 kb/s. La voie son, 23, est centrée sur une fréquence à 6,5 MHz, avec ± 15 kHz de bande passante, de la porteuse image.

Très schématiquement, en pointillé, figure la courbe de réponse amplitude/fréquence 24 d'une cellule de prédistorsion 60 expliquée plus loin.

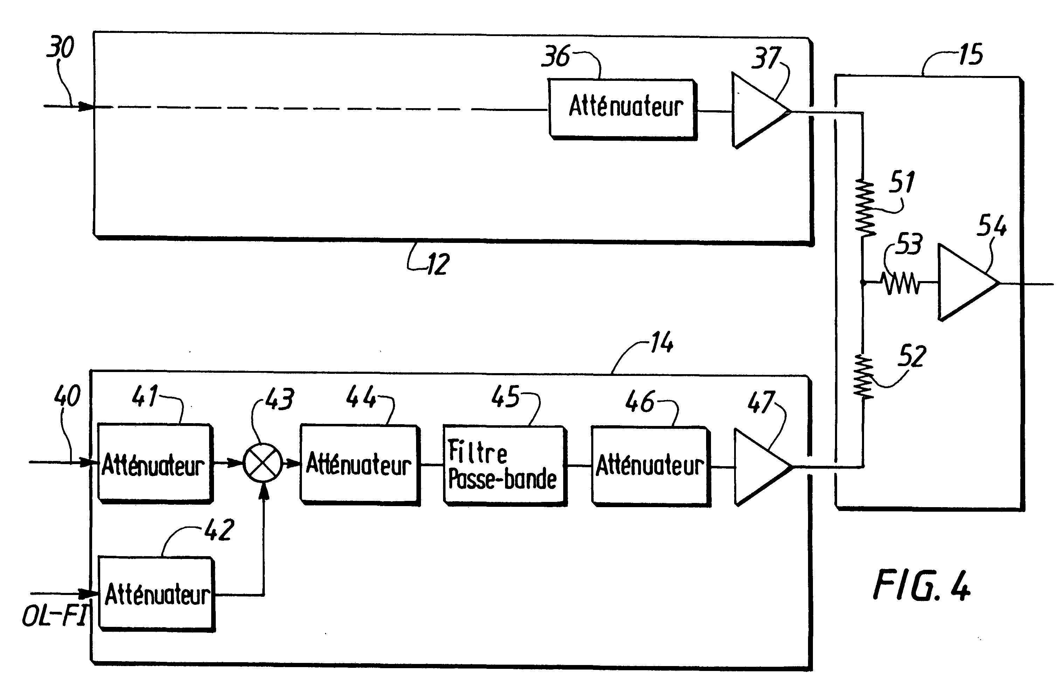

La figure 4 représente de façon plus détaillée les blocs 12, 14 et 15 de mise en forme et couplage. Le bloc 14 comporte, dans cet exemple, le mélangeur 43 recevant, à travers des atténuateurs respectifs 41 et 42, le signal NICAM, 40, à 5,85 MHz et la sortie OL-FI d'un oscillateur local à fréquence intermédiaire 32,7 MHz. Le mélangeur 43 est utilisé à des niveaux atténués de plus de 10 dB, par rapport aux spécifications constructeur, rendant ainsi minimales les dégradations NICAM et leurs influences potentielles sur l'image et le son.

Le mélangeur 43 alimente, à travers un atténuateur 44, un filtre passe-bande 45 centré sur 38,55 MHz attaquant un amplificateur de sortie 47 à travers un atténuateur 46. Le filtre 45, ici du type Butterworth à quatre pôles et 4 MHz de bande passante à -3 dB, transmet au coupleur 15 un signal à fréquence somme issu du mélange des deux fréquences incidentes 32,7 MHz d'image et 5,85 MHz de NICAM et réjecte, de 60 dB, le signal à fréquence différence et surtout le signal OL-FI de l'oscillateur local.

Le bloc 12 traitant l'image, de structure similaire à celle du bloc 14, reçoit le signal OL-Mod d'un oscillateur local et l'amplifie pour compenser les pertes induites par le coupleur 15. Le bloc 12 comporte en sortie un atténuateur 36 attaquant un amplificateur 37.

Les sorties des amplificateurs 37 et 47 des deux tronçons amont 12 et 14 sont respectivement reliées à deux résistances série 51, 52 constituant les deux entrées du coupleur 15. Un amplificateur de sortie 54 est relié en entrée aux autres extrémités des résistances 51-52 par une résistance série 53.

Dans cet exemple, le couplage image-NICAM est ainsi réalisé en fréquence intermédiaire.

Le tronçon aval commun 16 assure les fonctions connues de transposition de fréquence, à la fréquence d'émission radio, au moyen du mélangeur 163, et d'amplification avec mise en forme.

Pour optimiser les résultats, il est possible d'utiliser la cellule de prédistorsion 60 ici disposée en aval du bloc 14 de traitement NICAM et qui influe, autour de 5,85 MHz, sur le signal qu'il fournit. La cellule 60 est chargée de compenser simultanément les réponses amplitude/fréquence et temps de propagation de groupe (TPG)/fréquence de l'émetteur image autour de cette fréquence.

Dans cet exemple, la cellule 60 (un seul réglage TPG, Amplitude) de la figure 5 permet de compenser les distorsions de l'émetteur (erreurs liées au diplexeur 13) se manifestant sur la réponse amplitude/fréquence et simultanément celles relatives au temps de propagation de groupe.

On rappellera que la distorsion d'amplitude à + 5,85 MHz fausse le rapport d'amplitude entre les composantes aux diverses fréquences de la bande transmise et change (détériore) le spectre modulé du NICAM et que la distorsion de propagation de groupe crée des retards relatifs entre ces composantes d'un spectre NICAM utile.

Dans cet exemple de réalisation, la cellule 60 a une structure en T ponté, comportant, dans la branche verticale, un circuit série LC 62-61, avec une résistance 63 en parallèle sur l'inductance 62. Chaque barre horizontale du T est constituée d'un condensateur, respectivement 64 et 65, l'ensemble étant ponté par une inductance 66 en parallèle avec une résistance 67. Comme indiqué, la réponse amplitude/fréquence 24 de la cellule 60 est représentée très schématiquement sur la figure 3 (correction bande et TPG).

Comme l'illustre la courbe 24, la cellule 60, par un filtrage passe-bande, corrige le NICAM des défauts énoncés précédemment, améliorant ainsi les performances de ce service.

Une mesure comparative, par rapport à l'art antérieur de la figure 1, de la qualité du signal émis ne montre aucune dégradation significative des rapports signal/bruit, image ou son. L'amplitude du signal NICAM est dégradée de moins de 2 dB et sa dégradation équivalente au bruit est limitée, inférieure à 1dB. La limitation de la portée de diffusion du service NICAM est donc minimale, d'autant plus que les récepteurs existants ont des marges de sécurité élevées sur le rapport signal/bruit.

## Revendications

1. Chaîne d'émission de signaux de télévision comportant une chaîne (12, 15, 16) de mise en forme d'une voie image analogique et une chaîne (14, 15, 16) de mise en forme d'une voie de données, avec une partie de traitement (15, 16) commune aux deux chaînes (12, 15, 16; 14, 15, 16) caractérisée par le fait qu'elle comporte un filtre passe-bande (45) disposé en aval d'un mélangeur (43) à fréquence intermédiaire de la chaîne de données et, en amont de la partie commune, la chaîne de données comporte un atténuateur (41, 42, 44) destiné à favoriser les performances du mélangeur (43).

2. Chaîne d'émission selon la revendication 1, dans laquelle la partie commune comporte un mélangeur (163) de transposition de fréquence.

3. Chaîne d'émission selon l'une des revendications 1 et 2, dans laquelle chaque chaîne (12 ; 14) comporte un amplificateur (37 ; 47) d'attaque de la partie commune.

4. Chaîne d'émission selon l'une des revendications 1 à 3, dans laquelle la partie commune (15, 16) comporte un coupleur passif d'entrée (51-53).

5. Chaîne d'émission selon l'une des revendications 1 à 4, dans laquelle il est prévu un circuit de prédistorsion (60).

6. Chaîne d'émission selon la revendication 5, dans laquelle le circuit de prédistorsion (60) comporte une structure en T ponté.

## Patentansprüche

1. Kette zur Ausstrahlung von Fernsehsignalen mit einer Kette (12, 15, 16) zum Bilden eines Analogbildweges und einer Kette (14, 15, 16) zum Bilden eines Datenweges mit einem Bearbeitungsteil (15, 16), der beiden Ketten (12, 15, 16; 14, 15, 16) gemeinsam ist, dadurch gekennzeichnet, daß sie ein Bandpaß-Filter (45) umfaßt, das stromabwärts von einem Zwischenfrequenzmischer (43) der Datenkette angeordnet ist, und wobei die Datenkette stromaufwärts von dem gemeinsamen Teil ein Dämpfungsglied (41, 42, 44) zur Förderung der Leistungen des Mischers (43) umfaßt.

2. Ausstrahlungskette nach Anspruch 1, in der der gemeinsame Teil einen Frequenzumsetzungsmischer (163) umfaßt.

3. Ausstrahlungskette nach Anspruch 1 oder 2, in der jede Kette (12; 14) einen Treiberverstärker (37; 47) des gemeinsamen Teils umfaßt.

4. Ausstrahlungskette nach einem der Ansprüche 1 bis 3, in der der gemeinsame Teil (15, 16) einen passiven Eingangskoppler (51-53) umfaßt.

5. Ausstrahlungskette nach einem der Ansprüche 1 bis 4, in der eine Vorverzerrungsschaltung (60) vorgesehen ist.

6. Ausstrahlungskette nach Anspruch 5, in der die Vorverzerrungsschaltung (60) eine überbrückte T-Struktur umfaßt.

## Claims

1. Television signal transmission line with a line (12, 15, 16) for shaping an analog image channel and a line (14, 15, 16) for shaping a data channel, with a processing section (15, 16) common to the two lines (12, 15, 16 ; 14, 15, 16) characterised by the fact that it includes a pass-band filter (45) arranged downstream of an intermediate frequency mixer (43) of the data channel and, upstream of the common section, the data channel includes an attenuator (41, 42, 44) intended to promote the performance of the mixer (43).

2. Transmission line according to claim 1, in which the common section has a frequency transposition mixer (163).

3. Transmission line according to one of the claims 1 and 2, in which each line (12 ; 14) includes an amplifier (37 ; 47) for inputting the common section.

4. Transmission line according to one of the claims 1 to 3, in which the common section (15, 16) includes a passive input coupler (51-53).

5. Transmission line according to one of the claims 1 to 4, in which a predistortion circuit (60) is provided.

6. Transmission line according to claim 5, in which the predistortion circuit (60) includes a T- bridged structure.
